Europäisches Patentamt

European Patent Office

Office européen des brevets

(19)

(11) Veröffentlichungsnummer : **0 489 706 A1**

(12) **EUROPÄISCHE PATENTANMELDUNG**

(21) Anmeldenummer : **91890295.8**

(22) Anmeldetag : **04.12.91**

(51) Int. Cl.$^5$ : **A47L 11/30**

(30) Priorität : **04.12.90 AT 2446/90**

(43) Veröffentlichungstag der Anmeldung :
**10.06.92 Patentblatt 92/24**

(84) Benannte Vertragsstaaten :
**BE CH DE FR GB IT LI NL SE**

(71) Anmelder : **ABBREDERIS, Heinrich
Jagdschlossgasse 57/3
A-1130 Wien (AT)**

(72) Erfinder : **ABBREDERIS, Heinrich
Jagdschlossgasse 57/3
A-1130 Wien (AT)**

(74) Vertreter : **Wildhack, Helmut, Dr. Dipl.-Ing.
Patentanwälte Dipl.-Ing. Leo Brauneiss
Dipl.-Ing. Dr. Helmut Wildhack Landstrasser
Hauptstrasse 50 Postfach 281
A-1031 Wien (AT)**

(54) **Vorrichtung zum Reinigen von Flächen.**

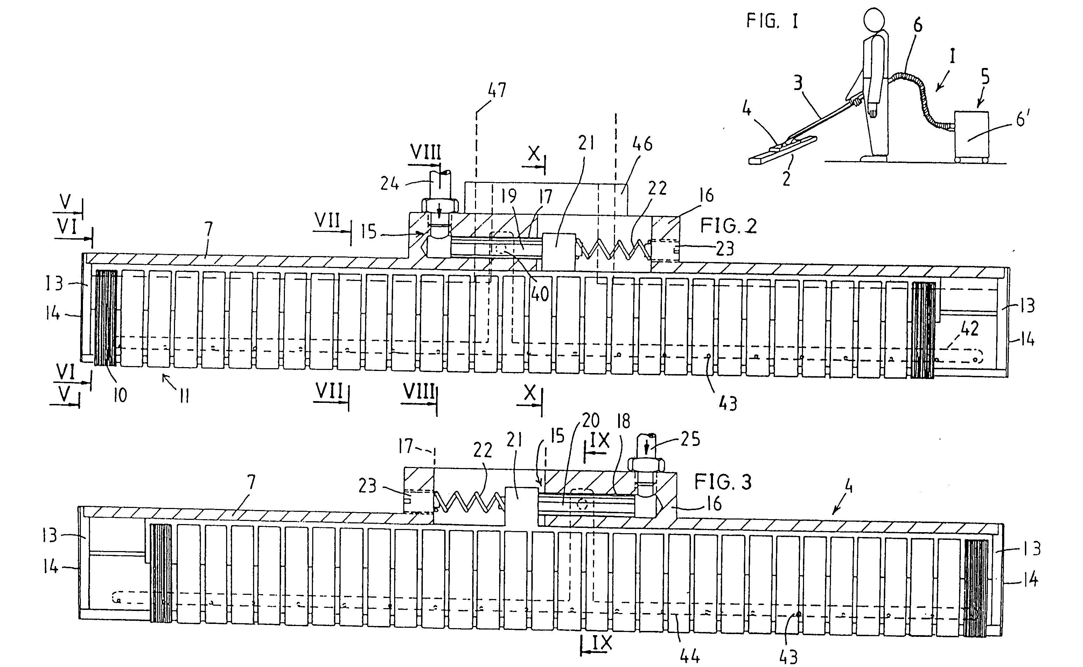

(57)   Eine Vorrichtung zum Reinigen von Flächen
hat ein entlang der zu reinigenden Fläche verschiebbares Gehäuse (4), in welchem zwei
Bürst- und bzw. oder Wischorgane (11) in einander entgegengesetzten Richtungen oszillierend verschieblich gelagert sind. Diese
Bewegung wird durch einen hydraulischen Antrieb (15) bewirkt, der zwei Kolben (19,20) hat,
mit denen die beiden Bürst- oder Wischorgane
(11) bewegungsschlüssig gekoppelt sind. Dem
hydraulischen Antrieb (15) werden über Leitungen (24,25) Reinigungsflüssigkeit und Spülflüssigkeit zugeführt, die den Bürst- oder
Wischorganen (11) zuleitbar sind. Dadurch wird
ein leichtes Reinigungsgerät geschaffen, mit
welchem die zu reinigende Fläche nach Wahl
nur gebürstet oder auch mit der Reinigungsflüssigkeit bzw. der Spülflüssigkeit behandelt
werden kann (Fig.2).

FIG. 2

EP 0 489 706 A1

Die Erfindung bezieht sich auf eine Vorrichtung zum Reinigen von Flächen, mit einem entlang der zu reinigenden Fläche verschiebbaren Gehäuse, in welchem zumindest zwei Bürst- und bzw. oder Wischorgane, insbesondere Bürstenreihen, für die zu reinigende Fläche relativ zum Gehäuse beweglich gelagert sind, die einander entgegengerichtete Bewegungen vollführen, wofür im Gehäuse ein hydraulischer Antrieb vorgesehen ist, dem Druckflüssigkeit durch eine biegsame Leitung von einer außerhalb des Gehäuses befindlichen Pumpe zugeführt ist, wobei von einem außerhalb des Gehäuses befindlichen Tank Reinigungsflüssigkeit durch eine biegsame Leitung zu den Bürst- und bzw. oder Wischorganen führt, und wobei vom Gehäuse eine Absaugleitung für die Abfuhr der angefeuchteten Verunreinigungen wegführt.

In der Regel sind Vorrichtungen zur feuchten Reinigung von Flächen als sogenannte Naßstaubsauger ausgebildet. Hiebei wird auf eine horizontale, zu reinigende Fläche Wasser aufgetragen und die angefeuchteten Verunreinigungen werden durch einen Saugschlauch zu einem Filter abgesaugt, welches die festen Bestandteile der abgesaugten Flüssigkeit nach Art eines üblichen Staubsaugers zurückbehält. Nachteilig ist hieran die geringe Wirksamkeit sowie der Umstand, daß derartige Naßstaubsauger nur bei horizontalen Flächen anwendbar sind. Zudem muß das vor der Durchführung des eigentlichen Reinigungsvorganges aufgetragene Wasser zumeist längere Zeit auf der zu reinigenden Fläche stehen gelassen werden, bevor der Reinigungsvorgang beginnen kann. Dies kann die zu reinigende Fläche schädigen. Schließlich bleibt die gereinigte Fläche naß zurück, was häufig eine Unfallgefahr bedeutet.

Es wurde daher bereits eine Vorrichtung der eingangs geschilderten Art zur Reinigung von Flächen vorgeschlagen (WO 89/03191), bei welcher an einem Saugkopf zwei konzentrische, in entgegengesetzter Drehrichtung umlaufende kreisringförmige Bürstenkränze gelagert sind. In den Spalt zwischen diesen beiden Bürstenkränzen wird die Reinigungsflüssigkeit eingespritzt, die zusammen mit den Verunreinigungen über die Absaugleitung aus dem Saugkopf abgesaugt wird. Der Antrieb der umlaufenden Bürstenkränze erfolgt mittels eines im Saugkopf angeordneten Hydraulikmotors. Ein solcher Saugkopf ist auch für geneigte bzw. vertikale Flächen oder auch über Kopf verwendbar und vermeidet die zuvor geschilderten Nachteile. Durch die Kreisringform der Bürstenkränze ist jedoch die Reinigung von Ecken einer Fläche nicht möglich, die von einem von der Flächenebene sich weg erstreckenden Rand, z.B. von Wänden umgeben ist. Ferner bedingt die bekannte Vorrichtung zumindest vier zum Saugkopf führende Leitungen, nämlich zwei Hydraulikleitungen zum Hydraulikmotor, eine Leitung für die Zuleitung der Reinigungsflüssigkeit und eine Absaugleitung.

Andere bekannte Vorrichtungen (DD-A 259 250) verwenden als entlang zu reinigenden Fläche verschiebbaren Bauteil einen elastischen Balg, der durch pulsierend zugeleitete Druckflüssigkeit impulsweise ausgedehnt wird. Solche Geräte sind schwer und unhandlich, der Austritt der Reinigungsflüssigkeit zu den vom Balg getragenen Bürsten ist abhängig von der Dehnung des Balgmateriales, die ihrerseits wieder abhängig ist von der Höhe des Druckes des zugeführten Mediums sowie von Zufälligkeiten im Balgmaterial.

Die Erfindung setzt sich zur Aufgabe, die eingangs zuerst geschilderte bekannte Konstruktion noch weiter zu verbessern, insbesondere hinsichtlich der Möglichkeit der Reinigung von Ecken der zu reinigenden Fläche und hinsichtlich des Gewichtes sowie des Aufwandes, insbesondere an Leitungen. Die Erfindung löst diese Aufgabe dadurch, daß die Bürst- und bzw. oder Wischorgane durch den hydraulischen Antrieb zu einer oszillierenden geradlinigen Bewegung angetrieben und hiefür im Gehäuse an geradlinigen Führungen zueinander parallel geführt sind und mit zumindest einem Kolben des hydraulischen Antriebes bewegungsschlüssig verbunden sind, wobei jeder Kolben von einem für den Reinigungsvorgang verwendbaren, den Bürst- und bzw. oder Wischorganen zuleitbaren hydraulischen Antriebsmedium impulsweise beaufschlagt ist und jeder Kolben unter der Einwirkung einer Rückführfeder steht. Auf diese Weise bildet die in das Gehäuse geleitete Flüssigkeit, sei es die Reinigungsflüssigkeit und bzw. oder die Spülflüssigkeit, das Druckmittel, mit welchem die Kolben des hydraulischen Antriebes angetrieben werden. Im Vergleich zur eingangs beschriebenen bekannten Vorrichtung reduziert sich daher der Leitungsaufwand zum Gehäuse, welches einen Saugkopf bildet, auf eine geringere Anzahl von Leitungen, nämlich nur jene, welche für die Zuleitung der Druckflüssigkeit verwendet wird bzw. werden, und auf die Absaugleitung. Dies bildet nicht nur ein Ersparnis an Leitungsaufwand, sondern auch eine Verringerung des Gewichtes des entlang der zu reinigenden Fläche zu bewegenden Gehäuses (Saugkopfes). Die geradlinig beweglichen Bürst- und bzw. oder Wischorgane ermöglichen es bei zweckmäßiger Anordnung im Gehäuse, insbesondere nahe der Gehäuseseitenwand, diese Organe auch in die Ecken der zu reinigenden Fläche zu führen. Die einander entgegengesetzt gerichtete Bewegung der Bürst- und bzw. oder Wischorgane vermeidet Reaktionskräfte, welche von der zu reinigenden Fläche auf das Gehäuse übertragen werden. Es läßt sich daher das Gehäuse leicht bewegen, trotz einer intensiven Reinigungswirkung.

Die Erfindung macht somit Gebrauch von der aus der zuvor erwähnten DD-A bekannten Doppelfunktion einer zugeleiteten Druckflüssigkeit, nämlich einerseits für die Reinigungszwecke an sich, anderseits für eine Hin- und Herbewegung eines Bürst- und bzw. oder Wischorganes. Beim Erfindungsgegenstand ist diese Bewegung jedoch kontrolliert und nicht von Zufälligkeiten des verwendeten Materiales abhängig, der Zutritt dieser Flüssigkeit zu den Bürst- und bzw. Wischorganen ist lediglich abhängig vom verwendeten Leitungsquerschnitt und nicht von der Dehnung eines unzuverlässigen Materiales.

Entlang geradliniger Führungen hin- und herbewegte Bürsten eines Reinigungsorganes sind an sich ebenfalls bekannt (DE-A 915 548), jedoch erfolgt diese Hin- und Herbewegung von Hand mittels eines Gestänges. Diese bekannte Vorrichtung erfordert daher zu ihrer Bedienung zwei Hände, wogegen beim Erfindungsgegenstand lediglich eine einzige Hand für die Verschiebung des Gehäuses entlang der zu reinigenden Fläche erforderlich ist. Darüberhinaus muß beim Gegenstand der bekannten Vorrichtung ein erheblicher Kraftaufwand von Hand eingebracht werden, um über das Gestänge die Bürsten verschieben zu können. Dieser Kraftaufwand entfällt beim Erfindungsgegenstand völlig, da der hydraulische Antrieb die zur Bewegung der Bürst- und bzw. oder Wischorgane nötige Energie einbringt.

Gemäß einer bevorzugten Ausführungsform der Erfindung ist dem Gehäuse außer der Reinigungsflüssigkeit auch eine Spülflüssigkeit, insbesondere Wasser, durch eine weitere biegsame Leitung zuführbar, wobei von den beiden Flüssigkeiten zumindest eine zwei Kolben als Druckflüssigkeit impulsweise beaufschlagt und beide Flüssigkeiten den Bürst- und bzw. oder Wischorganen zugeleitet sind. Es kann auf diese Weise die zu behandelnde Fläche in einem Vorgang gebürstet, bei Bedarf mit Reinigungsmittellösung gewaschen bzw. bei Bedarf mit Reinwasser gespült und gesaugt werden. Reinigungsflüssigkeit und Spülflüssigkeit arbeiten simultan.

Es wäre möglich, diejenige Flüssigkeit, welche die Druckflüssigkeit bildet, zwischen zwei Kolben zu führen, wobei sich die beiden Kolben voneinander weg bzw. aufeinander zu bewegen. Günstiger ist es jedoch gemäß einer bevorzugten Ausführungsform der Erfindung, wenn der hydraulische Antrieb zwei im Gehäuse parallel nebeneinander, jedoch einander entgegengesetzt gerichtet angeordnete Arbeitsräume für die zwei Kolben hat, in denen die durch die Federn am jeweils einen Stirnende belasteten Kolben verschiebbar geführt sind, deren jeweils anderer Stirnfläche die Reinigungsflüssigkeit bzw. die Spülflüssigkeit zugeführt sind, wobei von diesen Arbeitsräumen Überströmkanäle für die Reinigungsflüssigkeit bzw. die Spülflüssigkeit zu den Bürst- und bzw. oder Wischorganen führen, und wobei die Fördermengen der Pumpen regelbar sind. Diese Überströmkanäle werden erst wirksam, wenn der Hub des betreffenden Kolbens ein bestimmtes Maß überschreitet. Ist dies nicht der Fall, so bewegt sich lediglich der Kolben im Takt der impulsweisen Druckflüssigkeitsbeaufschlagung hin und her, wobei die Rückführung durch die Feder erfolgt. Es erfolgt jedoch keine Zuleitung von Reinigungsflüssigkeit bzw. Spülflüssigkeit zum Bürst-bzw. Wischorgan. Das Gerät bürstet dann nur. Übersteigt jedoch der Hub des Kolbens ein bestimmtes Maß, dann wird bei jeder Kolbenbewegung der Überströmkanal freigegeben, sodaß aus dem Arbeitsraum des Kolbens eine entsprechende Menge an Spülflüssigkeit bzw. Reinigungsflüssigkeit zum Bürst- bzw. Wischorgan strömen kann. Diese Menge hängt ab von der Dauer der Öffnung des Überströmkanales und somit von der Größe des Kolbenhubes, welche mittels der Fördermenge der Pumpe beliebig wählbar ist. Die Nebeneinanderanordnung der beiden Arbeitsräume ergibt eine gedrängtere Bauweise als die gleichachsige Anordnung, obwohl auch letztere im Prinzip möglich wäre. Um eine große Arbeitsbreite zu erzielen, empfiehlt es sich, die Gehäusedimension in Richtung der oszillierenden Bewegung des Bürst- und bzw. oder Wischorganes möglichst groß zu wählen. Um hiebei übergroße Kolbenhübe zu vermeiden und somit das Gewicht der Konstruktion zu verringern, empfiehlt es sich, daß sich im Rahmen der Erfindung die Bürst- und bzw. oder Wischorgane über einen Großteil der Länge des Gehäuses erstrecken und der Hub ihrer oszillierenden Bewegung nur einen Bruchteil dieser Länge beträgt. Die oszillierende Bewegung erfolgt daher über eine Strecke, die wesentlich kleiner ist als die Länge des Bürst- und bzw. oder Wischorganes, was jedoch in der Praxis völlig ausreicht.

Die einander entgegengesetzte Bewegung der beiden Bürst- und bzw. oder Wischorgane ließe sich durch ein Gestänge oder durch eine Umlenkung, etwa einer Kette, leicht erzielen, auch wenn beide Arbeitsräume gleichgerichtet sind. Eine solche kinetische Umlenkung der angreifenden Kräfte läßt sich jedoch vermeiden, wenn im Rahmen der Erfindung die Arbeitsräume des hydraulischen Antriebes zueinander parallel, jedoch einander entgegengesetzt gerichtet angeordnet sind.

Um eine möglichst gleichmäßige Verteilung der Reinigungsflüssigkeit bzw. der Spülflüssigkeit über die Länge der Bürst- und bzw. oder Wischorgane zu erzielen, sind im Rahmen der Erfindung die Überströmkanäle an sich entlang der Länge der Bürst- und bzw. oder Wischorgane erstreckende Verteilkanäle angeschlossen, von denen Düsen gegen die Bürst- und bzw. oder Wischorgane zu gerichtet sind.

Gemäß einer bevorzugten Ausführungsform der Erfindung sind die Pumpen für die Reinigungsflüssigkeit und die Spülflüssigkeit von Kolbenpumpen gebildet, deren Arbeitsräumen die Flüssigkeiten über Rückschlagventile von Tanks zugeführt werden und die von einem gemeinsamen Antrieb, vorzugsweise mit verstellbarem Kolbenhub, angetrieben sind. Der verstellbare Kolbenhub dient zur Einstellung der Fördermenge der Kolbenpumpen, deren Rückwärtshub von den Arbeitsräumen des Gehäuses die betreffende Flüssigkeit wieder zurücksaugt, soweit diese Flüssigkeit nicht durch die Überströmbohrungen den Bürst- bzw. Wischorganen zugeleitet wurde.

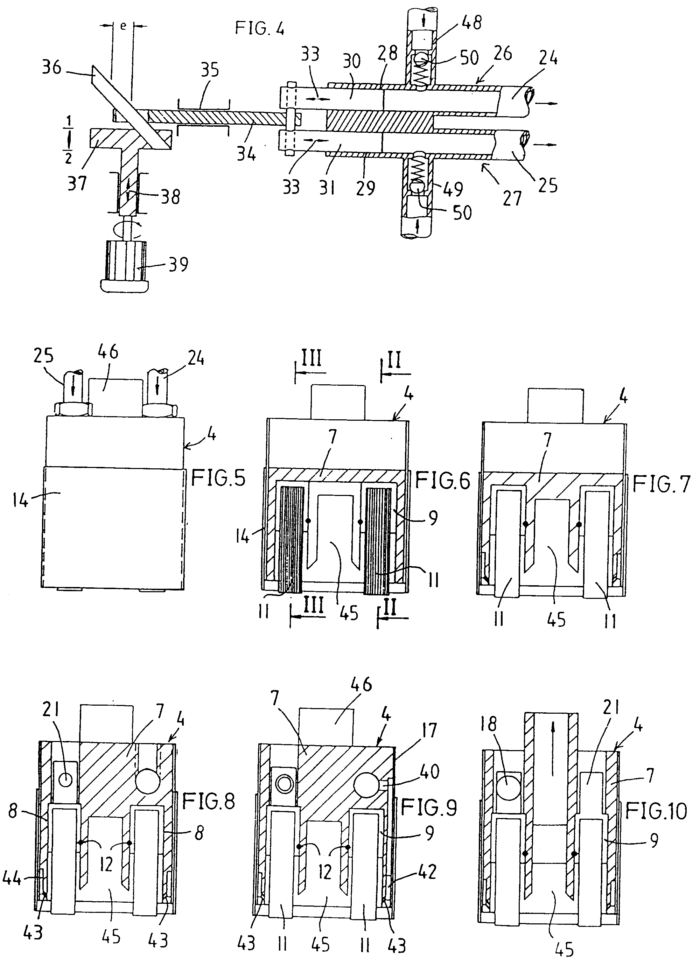

Weitere Kennzeichen und Vorteile der Erfindung ergeben sich aus der Beschreibung eines Ausführungsbeispieles, welches in der Zeichnung schematisch dargestellt ist. Fig.1 zeigt die Gesamtansicht der Vorrichtung im Gebrauch. Die Fig.2 und 3 sind Vertikalschnitte entlang den Linien II - II bzw. III - III der Fig.6 durch das Gehäuse, wobei in Fig.2 der besseren Deutlichkeit halber auch der vor der Schnittlinie liegende Verteilkanal eingezeichnet wurde, Fig.4 zeigt das Schema der Pumpe im Schnitt. Die Fig.5 bis 8 und 10 sind Schnitte nach den Linien V - V bzw. VI - VI bzw. VII - VII bzw. VIII - VIII bzw. X - X der Fig.2. Fig.9 ist ein Schnitt nach der Linie IX - IX der Fig.3.

Die Vorrichtung 1 (Fig.1) hat ein entlang der zu reinigenden Fläche 2 mittels eines Stieles 3 verschiebbares Gehäuse 4, welchem von einer Versorgungseinheit 5, die in einem eigenen, zweckmäßig verfahrbaren, Gehäuse 6 untergebracht ist, Reinigungsflüssigkeit und Spülflüssigkeit über einen biegsamen Strang 6 zugeführt werden, der sich in seinem dem Gehäuse 4 benachbarten Abschnitt in den hohlen Stiel 3 fortsetzt. Dieser Strang 6 umfaßt auch eine Absaugeleitung für die Abfuhr von Schmutzwasser aus dem Gehäuse 4. Ferner umfaßt die Versorgungseinheit 5 auch zumindest eine Pumpe für die Förderung der erwähnten Flüssigkeit sowie einen elektrischen Antrieb für das nicht gesondert dargestellte Saugaggregat sowie die Pumpe.

Das in den Fig.2, 3 und 5 bis 10 im Schnitt in größerem Maßstab dargestellte Gehäuse 4 hat einen Grundkörper 7, welcher im Grundriß die Form eines langgestreckten Rechteckes hat. Die der zu bearbeitenden Fläche 2 zugekehrte Gläche dieses Grundkörpers 7 hat zwei parallel zueinander verlaufende, im Querschnitt U-förmige, geradlinige Führungen 8 (Fig.6 bis 10), in deren jeder eine im Querschnitt ebenfalls U-förmige Halterung 9 längsverschiebbar geführt ist, in der Bürsten 10 eines Bürst- und bzw. oder Wischorganes 11 gefaßt sind, zweckmäßig abschnittweise (Fig.2,3). Diese Halterungen 9 sind gegen Herausfallen aus den Führungen 8 durch Rundstäbe 12 gesichert, die sich in Längsrichtung des jeweiligen Bürst- und bzw. oder Wischorganes 11 bis zu dessen Stirnenden erstrecken und in entsprechende Längsnuten der Halterung 9 bzw. der Führung 8 eingesteckt sind. Um dies von der Schmalseite des rechteckigen Gehäuses 4 her zu ermöglichen, sind die beiden schmalen Seitenwände 13 (Fig.2,3) des Gehäuses 4 seitlich in entsprechende Ausnehmungen eingesteckt. Eine alle Seitenwände umschließende, endlose Gummimanschette 14 verhindert das Abfallen der Seitenwände 13 und bildet zugleich einen elastischen Puffer an den Seitenwänden des Gehäuses 4, welcher die Stöße dämpft, die bei der Berührung des Gehäuses 4 mit die zu reinigende Fläche 2 berandenden Wänden od.dgl. entstehen können. Zugleich dient diese Gummimanschette in vorteilhafter Weise einer Erzeugung eines Unterdruckes innerhalb des Gehäuses bzw. eines Anpreßdruckes auf die zu reinigende Fläche, was in vorteilhafter Weise dazu beiträgt, einen unerwünschten Austritt von Flüssigkeit aus dem Gehäuse zu vermeiden.

Die in den Halterungen 9 gehalterten Bürsten 10 stehen vertikal, sie könnten jedoch auch beliebig geneigt angeordnet sein, etwa V-förmig in den beiden Organen 11 relativ zueinander geneigt.

Die beiden Bürst- und bzw. oder Wischorgane 11 sind in Längsrichtung der Halterungen 9 bzw. der Führungen 8 zu einer oszillierenden Bewegung angetrieben, wobei die beiden Organe 11 einander entgegengesetzte Bewegungen vollführen, so daß, wenn das eine Organ 11 die eine Totpunktlage der oszillierenden Bewegung erreicht hat, das andere Organ 11 die andere Totpunktlage einnimmt (Fig.2,3). In diesen Totpunktlagen liegt jeweils ein Stirnende der betreffenden Halterung 9 an einer Seitenwand 13 an. Die Amplitude dieser oszil-lierenden Bewegung beträgt nur einen kleinen Bruchteil der Länge des Gehäuses 4, was zur Erreichung eines guten Bürsteffektes völlig ausreicht. Diese geradlinige oszillierende Bewegung wird durch einen hydraulischen Antrieb 15 hervorgerufen, welcher im wesentlichen in einem nach oben ragenden Fortsatz 16 des Gehäuses 4 untergebracht ist (Fig.2,3). Dieser hydraulische Antrieb 15 weist eine der Anzahl der Bürst- und bzw. oder Wischorgane 11 entsprechende Anzahl von Arbeitsräumen 17,18 auf, im vorliegenden Ausführungsbeispiel also zwei Arbeitsräume. In jedem dieser Arbeitsräume 17,18 ist ein Kolben 19 bzw. 20 geführt, der an seinem einen Stirnende mit einem nach oben ragenden Fortsatz 21 einer der beiden Halterungen 9 verbunden ist. Dieser Fortsatz ist an seiner dem betreffenden Kolben 19 bzw. 20 abgewendeten Seite durch eine Druckfeder 22 belastet, die sich gegen eine in eine Gewindebohrung des Fortsatzes 16 des Gehäuses 4 eingeschraubten Schraube 23 abstützt. Die Anordnung ist so getroffen, daß die beiden Kolben 19,20 von den Druckfedern 22 in entgegengesetzter Richtung belastet sind. Dem im betreffenden Arbeitsraum 17 bzw. 18 befindlichen Stirnende des Kolbens 19 bzw. 20 wird Druckflüssigkeit durch eine Leitung 24 bzw. 25 von einer außerhalb des Gehäuses 4 befindlichen Pumpe 26 bzw. 27 (Fig.4) aus zugeführt, und zwar durch die Leitung 24 Spülflüssigkeit in den Arbeitsraum 17, durch die Leitung 25 Reinigungsflüssigkeit, z.B. eine Seifenlösung oder ein flüssiges Reinigungsmittel, in den Arbeitsraum 18. Jede der beiden Pumpen 26,27 ist als Kolbenpumpe mit einem Arbeitsraum 28 bzw. 29 und einem darin geführten Kolben 30 bzw. 31 ausgeführt, wobei die beiden Kolben 30,31 durch eine Querstange 32 zusammengefaßt und gemeinsam in Richtung der Doppelpfeile 33 von einer Pleuelstange 34 angetrieben sind, die in einer Führung 35 eines nicht dargestellten Gehäuses verschwenkbar geführt ist und mit ihrem anderen Ende an einer Schrägstange 36 angelenkt ist, die nach Art eines Kurbelzapfens exzentrisch an einer Kurbelscheibe 37 befestigt ist, die in Richtung des Doppelpfeiles 38 samt dem sie antreibenden Motor 39 verlagerbar ist. Dadurch kann die Exzentrizität e, welche auf die Pleuelstange 34 wirkt, verstellt werden, wobei sich der Anlenkpunkt der Pleuelstange 34 an der Schrägstange 36 verschiebt.

Zwei Lagen dieses Angriffpunktes sind in Fig.4 schematisch angedeutet, wobei die eine, für die Pleuelstange 34 wirksame Stellung der Exzentrizität 0 entspricht, in welcher also die Kolben 30,31 nicht bewegt werden, während die andere, dargestellte Gelenklage der maximalen Exzentrizität e entspricht. Auf diese Weise läßt sich der Hub der Kolben 30,31 und damit die den Arbeitsräumen 17 bzw. 18 des hydraulischen Antriebes 15 impulsweise zugeführte Flüssigkeitsmenge nach Wunsch einstellen. Von jedem dieser Arbeitsräume 17,18 zweigt etwa in der Mitte seiner axialen Länge eine Überströmbohrung 40 bzw. 41 ab (Fig.2,3). Die eine, der Spülflüssigkeit zugeordnete Überströmbohrung 40 ist im Gehäuse 4 an einen Verteilkanal 42 (Fig.2,9) angeschlossen, der sich im Gehäuse 4 außenseitig entlang des benachbarten Bürst- und bzw. oder Wischorganes 11 im wesentlichen über dessen gesamte Länge inklusive des Hubes erstreckt und nach innen gerichtete Düsen 43 hat, aus denen Spülflüssigkeit in Richtung zu den Bürsten 10 des betreffenden Bürst- und bzw. oder Wischorganes 11 austritt. In analoger Weise steht die Überströmbohrung 41 mit einem Verteilkanal 44 (Fig.3,8) in Verbindung, von welchen Düsen 43 gegen das andere Bürst- bzw. Wischorgan 11 gerichtet sind. Zweckmäßig ist die Achse der Düsen 43 nach unten geneigt angeordnet, vorzugsweise etwa um 45° geneigt.

Zwischen den beiden Führungen 8 für die beiden Bürst- und bzw. oder Wischorgane 11 verläuft ein Absaugkanal 45 (Fig.6 bis 10) im Gehäuse 4 über dessen gesamte Länge, der in einen nach oben gerichteten Stutzen 46 des Fortsatzes 16 des Gehäuses 4 führt und dort an eine Absaugleitung 47 (Fig.2,3) angeschlossen ist. Die Absaugleitung und die beiden Leitungen 24,25 für die Spülflüssigkeit bzw. die Reinigungsflüssigkeit verlaufen innerhalb des Stieles 3 (Fig.1) und sind im Anschluß an diesen zu einem gemeinsamen biegsamen Strang zusammengefaßt, welcher innerhalb des Schlauches 6 (Fig.1) verläuft. Im Gehäuse 6′ der Versorgungseinheit 5 befindet sich ein durch einen Elektromotor angetriebenes Saugaggregat, welches durch die Absaugleitung 47 die angefeuchteten Verunreinigungen aus dem Gehäuse 4 absaugt und in einen im Gehäuse 6′ befindlichen Tank befördert. Im Gehäuse 6′ befinden sich weiters nicht dargestellte Tanks für die Reinigungsflüssigkeit und die Spülflüssigkeit, an welche Tanks zu den Pumpen 26,27 (Fig.4) führende Zuführleitungen 48 bzw. 49 angeschlossen sind, in welche vor den Arbeitsräumen 28 bzw. 29 angeordnete Rückschlagventile 50 sitzen.

Die Funktionsweise ist wie folgt: Wird in Richtung des Doppelpfeiles 38 (Fig.4) die Kurbelscheibe 37 so weit aus der in Fig.4 dargestellten Nullstellung herausbewegt, daß die Exzentrizität e von Null verschieden ist, so werden durch die beiden Pumpen 26,27 Mengen an Reinigungsflüssigkeit bzw. Spülflüssigkeit impulsweise durch die Leitungen 24 bzw. 25 dem hydraulischen Antrieb 15 zugeführt. Sind diese Flüssigkeitsmengen so gering, daß durch die über die zugeführten Flüssigkeitsmengen erzwungene Bewegung der Kolben 19,20 diese Kolben die zugeordneten Überströmbohrungen 40 bzw. 41 nicht freigeben, so wird keine Spül- bzw. Reinigungsflüssigkeit über die Düsen 43 zu den Bürsten 10 versprüht, sondern die Bürsten 10 vollführen eine trockene oszillierende Bürstbewegung im Takt, der über die Leitungen 24,25 zugeführten Druckflüssigkeit. Beim Rückwärtshub der Kolben 30,31 der Pumpen 26,27 werden die dem hydraulischen Antrieb 15 zugeführten Flüssigkeitsmengen aus den Arbeitsräumen 17,18 wieder in die Pumpen 26,27 zurückgesaugt. In diesem Fall erfolgt über die Leitungen 48,49 keine Flüssigkeitszufuhr von den Tanks her.

Wird jedoch die Exzentrizität e (Fig.4) so groß gewählt, daß im hydraulischen Antrieb 15 die Kolben 19 bzw. 20 die zugeordneten Überströmbohrungen 40,41 bei der Kolbenbewegung frei geben, so wird für die Dauer der Freigabe Reinigungs- bzw. Spülflüssigkeit über die Verteilerkanäle 42,44 den Düsen 43 zugeführt und auf die Bürsten 10 gesprüht. Die eine Bürstenreihe wird daher mit Reinigungsflüssigkeit befeuchtet, sodaß dort eine intensive Naßreinigung erfolgt. Die andere Bürstenreihe wird mit der Spülflüssigkeit (insbesondere Wasser) besprüht und vollführt daher eine spülende Reinigungsbewegung. Beide über die Düsen 43 versprühten Flüssigkeitsmengen werden zusammen mit den über die Bürsten 10 von der zu reinigenden Fläche gelösten Verunreinigungen in den Absaugkanal 45 gesaugt und über die Absaugleitung 47 abgeführt. Wie ersichtlich, kann die Menge der den Düsen 43 im Takt der Bewegung der Pumpen 26,27 zugeführten Flüssigkeitsmengen stufenlos verstellt werden, und zwar durch Verstellung der Exzentrizität e (Fig.4). Bei der dargestellten Ausführungsform geschieht diese Verstellung gleichsinnig und im gleichen Maß, da beide Kolben 30,31 an die gemeinsame Pleuelstange 34 gekoppelt sind. Es wäre jedoch durchaus möglich, die beiden Kolben 30,31 unabhängig voneinander hinsichtlich ihres Hubes verstellen zu können, entweder durch Antrieb von unterschiedlichen Antrieben aus oder durch Anordnung gesonderter Verstellmittel für den Hub der beiden Kolben 30 bzw. 31. Auf diese Weise wäre es möglich, die dem Gehäuse 4 zugeführten Mengen an Reinigungsflüssigkeit und Spülflüssigkeit nach Wunsch unabhängig voneinander einzustellen.

Es wäre möglich, im Gehäuse 4 mehr als zwei Bürstenreihen in der dargestellten Weise verschieblich anzuordnen und in zwei Gruppen zu bewegen, entsprechend den beiden dargestellten Bürstenreihen.

Ferner wäre es möglich, für die beiden dargestellten Bürstenreihen eine gemeinsame, einachsige Kolbenführung vorzusehen, in welcher sich zwei Kolben bewegen, wobei eine Druckflüssigkeit (Reinigungsmittelflüssigkeit oder Spülwasser, insbesondere Klarwasser) zwischen die beiden Kolben geführt wird, wobei die Rückführung der Kolben durch Federn erfolgt. Natürlich wäre auch die umgekehrte Anordnung denkbar, d.h.

Beaufschlagung der beiden Kolben durch die Druckflüssigkeit von außen her und Anordnung einer gemeinsamen Druckfeder zwischen den beiden Kolben. In diesen Fällen müßte jedoch die jeweils andere Druckflüssigkeit (Reinigungsflüssigkeit oder Spülwasser) getrennt zu den Bürsten zugeführt werden.

Das Gehäuse 4 läßt sich mit geringen Herstellungskosten im Kunststoffspritzguß fertigen. Es hat dann ein geringes Gewicht, sodaß das Gehäuse 4 samt den darin angeordneten Bürstensätzen leicht entlang der zu reinigenden Fläche bewegt werden kann. Neben der hohen Bürstleitung ist ein wesentlicher Vorteil die Möglichkeit einer Reinigung auch in den Ecken, sodaß sich die erfindungsggemäße Vorrichtung nicht nur für den gewerblichen Reinigungssektor, sondern auch für Haushalte usw. eignet.

**Patentansprüche**

1. Vorrichtung zum Reinigen von Flächen, mit einem entlang der zu reinigenden Fläche (2) verschiebbaren Gehäuse (4), in welchem zumindest zwei Bürst- und bzw. oder Wischorgane (11), insbesondere Bürstenreihen, für die zu reinigende Fläche (2) relativ zum Gehäuse (4) beweglich gelagert sind, die einander entgegen gerichtete Bewegungen vollführen, wofür im Gehäuse (4) ein hydraulischer Antrieb (15) vorgesehen ist, dem Druckflüssigkeit durch eine biegsame Leitung (23,25) von einer außerhalb des Gehäuses (4) befindlichen Pumpe (26,27) zugeführt ist, wobei von einem außerhalb des Gehäuses (4) befindlichen Tank Reinigungsflüssigkeit durch eine biegsame Leitung (25) zu den Bürst- und bzw. oder Wischorganen (11) geführt ist und wobei vom Gehäuse (4) eine Absaugleitung (47) für die Abfuhr der angefeuchteten Verunreinigungen wegführt, dadurch gekennzeichnet, daß die Bürst- und bzw. oder Wischorgane (11) durch den hydraulischen Antrieb (15) zur einer oszillierenden geradlinigen Bewegung angetrieben und hiefür im Gehäuse (4) an geradlinigen Führungen (8) zueinander parallel geführt sind und mit zumindest einem Kolben (19,20) des hydraulischen Antriebes (15) bewegungsschlüssig verbunden sind, wobei jeder Kolben von einem für den Reinigungsvorgang verwendbaren, den Bürst- und bzw. oder Wischorganen (11) zuleitbaren hydraulischen Antriebsmedium impulsweise beaufschlagt ist und jeder Kolben (19, 20) unter der Einwirkung einer Rückführfeder (22) steht.

2. Vorrichtung nach Anspruch 1, dadurch gekennzeichnet, daß dem Gehäuse (4) außer der Reinigungsflüssigkeit auch eine Spülflüssigkeit, insbesondere Wasser, durch eine weitere biegsame Leitung (24) zuführbar ist und daß von den beiden Flüssigkeiten zumindest eine zwei Kolben (19,20) als Druckflüssigkeit impulsweise beaufschlagt und beide Flüssigkeiten den Bürst- und bzw. oder Wischorganen (11) zugeleitet sind.

3. Vorrichtung nach Anspruch 2, dadurch gekennzeichnet, daß der hydraulische Antrieb (15) zwei im Gehäuse (4) parallel nebeneinander, jedoch einander entgegengesetzt gerichtet angeordnete Arbeitsräume (17,18) für die zwei Kolben (19,20) hat, in denen die durch die Federn (22) am jeweils einen Stirnende belasteten Kolben (19,20) verschiebbar geführt sind, deren jeweils anderen Stirnfläche die Reinigungsflüssigkeit bzw. die Spülflüssigkeit zugeführt sind, wobei von diesen Arbeitsräumen (17,18) Überströmkanäle (40,41) für die Reinigungsflüssigkeit bzw. die Spülflüssigkeit zu den Bürst- und bzw. oder Wischorganen (11) führen, und wobei die Fördermengen der Pumpen (26,27) regelbar sind.

4. Vorrichtung nach Anspruch 1, 2 oder 3, dadurch gekennzeichnet, daß sich die Bürst- und bzw. oder Wischorgane (11) über einen Großteil der Länge des Gehäuses (4) erstrecken und der Hub ihrer oszillierenden Bewegung nur einen Bruchteil dieser Länge beträgt.

5. Vorrichtung nach einem der Ansprüche 2 bis 4, dadurch gekennzeichnet, daß die Überströmkanäle (40,41) an sich entlang der Länge der Bürst- und bzw. oder Wischorgane erstreckende Verteilkanäle (42,44) angeschlossen sind, von denen Düsen (43) gegen die Bürst- und bzw. oder Wischorgane (11) zu gerichtet sind.

6. Vorrichtung nach einem der Ansprüche 1 bis 5, dadurch gekennzeichnet, daß die langgestreckten Bürst- und bzw. oder Wischorgane (11), insbesondere Bürsten, in im Querschnitt U-förmigen Halterungen (9) gefaßt sind, die in ihrer Längsrichtung in Führungen (8) des Gehäuses (4) geführt und gegen Herausfallen aus diesen Führungen (8) gesichert sind.

7. Vorrichtung nach Anspruch 6, dadurch gekennzeichnet, daß in die Führungen (8) und in die Halterungen (9) Stäbe, insbesondere Rundstäbe (12), eingreifen, die sich in Längsrichtung der Bürst- und bzw. oder Wischorgane (11) bis zu deren Stirnenden erstrecken.

8. Vorrichtung nach einem der Ansprüche 1 bis 7, dadurch gekennzeichnet, daß die Stirnenden der Führungen (8) durch, vorzugsweise in diese Stirnenden einsteckbare, plattenförmige Seitenwände (13) verschlossen sind, die durch eine das Gehäuse umschließende Manschette (14), vorzugsweise aus Gummi, gehalten sind.

9. Vorrichtung nach einem der Ansprüche 6 bis 8, dadurch gekennzeichnet, daß zwischen den beiden Führungen (8) ein sich über die Gehäuselänge erstreckender Absaugkanal (45) verläuft, der an die Absaugleitung (47) angeschlossen ist.

10. Vorrichtung nach einem der Ansprüche 1 bis 9, dadurch gekennzeichnet, daß die Pumpen (26,27) für die Reinigungsflüssigkeit und die Spülflüssigkeit von Kolbenpumpen gebildet sind, deren Arbeitsräumen (28,29) die Flüssigkeiten über Rückschlagventile (50) von Tanks zugeführt werden und die von einem gemeinsamen Antrieb, vorzugsweise mit verstellbarem Kolbenhub, angetrieben sind.

11. Vorrichtung nach Anspruch 10, dadurch gekennzeichnet, daß der Antrieb eine drehbar angetriebene Exzenterscheibe (37) hat, an der ein, vorzugsweise von einer Schrägstange (36) gebildeter, Exzenterzapfen, vorzugsweise mit verstellbarer Exzentrizität, sitzt, der mit den Kolben (30,31) verbunden ist.

12. Vorrichtung nach einem der Ansprüche 1 bis 11, dadurch gekennzeichnet, daß die Pumpen (26,27) sowie die Tanks für die Reinigungsflüssigkeit und die Spülflüssigkeit und ein weiterer Tank für das von der Absaugleitung (47) angelieferte Schmutzwasser in einer gesonderten Versorgungseinheit (5) zusammengefaßt sind, die vorzugsweise von einem eigenen Gehäuse (6′) umschlossen ist und von der die zu einem gemeinsamen Strang (6) zusammengefaßten Leitungen für die Spülflüssigkeit und die Reinigungsflüssigkeit sowie die Absaugleitung zum, vorzugsweise mit einem Stiel (3) versehenen, Gehäuse (4) der Bürst- und bzw. oder Wischorgane (11) führt.

13. Vorrichtung nach Anspruch 12, dadurch gekennzeichnet, daß der Stiel (3) von einem starr ausgebildeten Teil des Stranges (6) gebildet ist.

FIG. I

FIG. 2

FIG. 3

FIG. 4

FIG.5

FIG.6

FIG.7

FIG.8

FIG.9

FIG.10

9

Europäisches
Patentamt

# EUROPÄISCHER RECHERCHENBERICHT

Nummer der Anmeldung

EP    91 89 0295

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | WO-A-8 903 191 (H. ABBREDERIS)<br>* das ganze Dokument *<br>--- | 1 | A47L11/30 |
| D,A | DD-A-259 350 (ZENTRALES FORSCHUNGSINSTITUT FUER VERKEHRSWESEN DER DDR)<br>* das ganze Dokument *<br>--- | 1 | |
| A | DE-C-915 548 (P. KIRCHHOF)<br>* das ganze Dokument *<br>--- | 1 | |
| A | FR-A-2 403 774 (N. VINOLAS Y VALL-LLOSERA)<br>* Ansprüche; Abbildungen *<br>----- | 1 | |
| | | | **RECHERCHIERTE SACHGEBIETE (Int. Cl.5)**<br><br>A47L |

Der vorliegende Recherchenbericht wurde für alle Patentansprüche erstellt

| Recherchenort | Abschlußdatum der Recherche | Prüfer |
|---|---|---|
| DEN HAAG | 24 FEBRUAR 1992 | M. VANMOL |

EPO FORM 1503 03.82 (P0403)